(19) Europäisches Patentamt / European Patent Office / Office européen des brevets

(11) **EP 3 429 256 A1**

(12) **EUROPEAN PATENT APPLICATION**
published in accordance with Art. 153(4) EPC

(43) Date of publication:
**16.01.2019 Bulletin 2019/03**

(21) Application number: **17762562.1**

(22) Date of filing: **10.03.2017**

(51) Int Cl.:
*H04W 24/02* (2009.01)      *H04B 17/309* (2015.01)
*H04B 17/391* (2015.01)

(86) International application number:
**PCT/CN2017/076303**

(87) International publication number:
**WO 2017/152876 (14.09.2017 Gazette 2017/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **11.03.2016 CN 201610141563**

(71) Applicant: **Sony Corporation**
**Tokyo 108-0075 (JP)**

(72) Inventors:
• ZHANG, Zaichen
  Nanjing
  Jiangsu 210096 (CN)
• ZENG, Rong
  Nanjing
  Jiangsu 210096 (CN)
• LU, Pen-Shun
  Beijing 100028 (CN)
• GUO, Xin
  Beijing 100028 (CN)

(74) Representative: **D Young & Co LLP**
**120 Holborn**
**London EC1N 2DY (GB)**

(54) **APPARATUS AND METHOD FOR WIRELESS COMMUNICATIONS, AND PARAMETER OPTIMIZATION APPARATUS AND METHOD**

(57) The present disclosure provides an apparatus and method for wireless communications, an apparatus and method for a reception end and a sending end of the wireless communications, and a parameter optimization apparatus and method for an effective signal-to-noise ratio mapping algorithm. The apparatus for wireless communications comprises: a reception signal division unit, configured to perform space division on signals received through multiple antennas, so as to separately obtain multiple space division signals; and a channel prediction unit, configured to separately perform channel prediction on the spaces according to the multiple space division signals.

Figure 1

**Description**

The present application claims priority to Chinese Patent Application No. 201610141563.1, titled "APPARATUS AND METHOD FOR WIRELESS COMMUNICATIONS, AND PARAMETER OPTIMIZATION APPARATUS AND METHOD", filed on March 11, 2016 with the State Intellectual Property Office of People's Republic of China, which is incorporated herein by reference in its entirety.

**FIELD OF THE INVENTION**

The embodiments of the present disclosure generally relate to the field of wireless communications, and in particular to a link adaptive technique in a fast time-varying channel environment, and more particularly to an apparatus and a method for wireless communications, apparatus and methods for a receiving end and a transmitting end of wireless communications, as well as an apparatus and a method for optimizing a parameter in an effective signal-to-noise ratio mapping algorithm.

**BACKGROUND OF THE INVENTION**

With the development of modern transportation technology, in some special application occasions such as a high-speed train (a speed of which may be up to 350km/h currently), it is required to realize high-speed transmission of data under a fast moving condition. At present, many problems exist in the existing wireless transmission technology in the high-speed moving environment, in which a fast time-varying channel has a great influence on the system performance.

At present, the link adaptive technique is widely used in modern wireless mobile communication systems. A main idea of the link adaptive technique is to estimate a future propagation condition of a channel based on a measurement on a current propagation condition of the channel, and adaptively adjust a modulation manner and an encoding efficiency for transmitting a signal by a transmitting end based on an estimation of the future propagation condition of a wireless channel performed by a receiving end, so as to maximize a throughput rate of the system. In a case of a good propagation condition of the wireless channel, a high modulation index and a high encoding efficiency are used, and vice versa.

In a fast time-varying channel environment, the channel changes rapidly with time. Therefore, a mismatch between a feedback channel quality and a current channel quality becomes serious due to a feedback delay of a channel quality index parameter. A performance of a channel predicting algorithm deteriorates rapidly due to a low time correlation among wireless channel parameters, which may exacerbate the above mismatch problem. In addition, since the channel quality index is calculated based on a time range of an information frame, the wireless channel parameter changes even within a range of the same information frame due to the fast time-varying channel environment, this makes an evaluation on quality of the channel even more difficult.

In view of the above problems, it is desirable to provide a novel effective link adaptive technique.

**SUMMARY OF THE INVENTION**

In the following, an overview of the present invention is given simply to provide basic understanding to some aspects of the present invention. It should be understood that this overview is not an exhaustive overview of the present invention. It is not intended to determine a critical part or an important part of the present invention, nor to limit the scope of the present invention. An object of the overview is only to give some concepts in a simplified manner, which serves as a preface of a more detailed description described later.

According to an aspect of the present disclosure, an apparatus for wireless communications is provided, which includes: a receiving signal splitting unit, configured to perform spatial splitting on a signal received through multi-antenna, to obtain a plurality of spatially split signals respectively; and a channel predicting unit, configured to perform, based on the plurality of spatially split signals, channel prediction in respective spaces, respectively.

According to another aspect of the present disclosure, a method for wireless communications is further provided, which includes: performing spatial splitting on a signal received through multi-antenna, to obtain a plurality of spatially split signals respectively; and performing, based on the plurality of spatially split signals, channel prediction in respective spaces, respectively.

With the above apparatus and method for wireless communications according to the present disclosure, the channel prediction is performed based on each of the spatially split signals respectively, such that a strong time correlation of the spatially split signals can be utilized, thereby obtaining an accurate channel predicting result, and thus improving the throughput rate of a wireless communication system in a fast time-varying channel environment.

According to another aspect of the present disclosure, an apparatus for optimizing a parameter in an effective signal-to-noise ratio mapping algorithm is further provided, which includes a filter bank and a modeling unit. The filter bank includes multiple filters with filtering spaces orthogonal to each other and is configured to perform spatially orthogonal splitting filtering on a signal received through multi-antenna, to obtain a plurality of spatially orthogonal splitting filtered signals respectively. The modeling unit is configured to calculate a coefficient of a first order autoregressive channel model of each of orthogonal filtering spaces using filtering coefficients of a filter corresponding to the orthogonal filtering space, and combine the first order autoregressive channel models to obtain an equivalent first order autoregressive channel model. A wireless channel implementation is generated, a wireless channel implementation is optimized and generated using the wireless channel implementation, and the parameter is optimized using the wireless channel implementation.

According to another aspect of the present disclosure, a method for optimizing a parameter in an effective signal-to-noise ratio mapping algorithm is further provided, which includes: calculating a coefficient of a first order autoregressive channel model of each of orthogonal filtering spaces using filtering coefficients of a filter corresponding to the orthogonal filtering space in a filter bank, and combining the first order autoregressive channel models to obtain an equivalent first order autoregressive channel model, where the filter bank includes a plurality of filters with filtering spaces orthogonal to each other and is configured to perform spatially orthogonal splitting filtering on a signal received through multi-antenna, to obtain a plurality of spatially orthogonal splitting filtered signals respectively; and generating a wireless channel implementation using the equivalent first order autoregressive channel model, and optimizing the parameter using the wireless channel implementation.

The above apparatus and method for optimizing a parameter in an effective signal-to-noise ratio mapping algorithm according to the present disclosure establishes a channel model by using coefficients of the filters with filtering spaces orthogonal to each other in the filter bank, such that the parameter in the effective signal-to-noise ratio mapping algorithm can be optimized only using one channel implementation, thereby greatly reducing the amount of calculation and reducing complexity of the parameter optimization, as well as achieving optimization for a specific channel rather than the statistical optimization, thus improving the accuracy of the parameter optimization and improving the throughput rate of wireless communication system.

According to another aspect of the present disclosure, an apparatus for a receiving end of wireless communications is further provided, which includes: a measuring unit, configured to periodically measure a root mean square wave number spread and a moving speed of the apparatus; a determining unit, configured to determine whether a change of an indication value based on the root mean square wave number spread and the moving speed exceeds a predetermined range; and a transceiving unit, configured to transmit the indication value to a transmitting end in a case where the determining unit determines that the change exceeds the predetermined range, such that the transmitting end determines, based on the indication value, a period of the apparatus reporting a channel quality index and the number of channel quality indexes to be transmitted each time.

According to another aspect of the present disclosure, a method for a receiving end of wireless communications is further provided, which includes: periodically measuring a root mean square wave number spread and a moving speed of the receiving end; determining whether a change of an indication value based on the root mean square wave number spread and the moving speed exceeds a predetermined range; and transmitting the indication value to a transmitting end in a case where it is determined that the change exceeds the predetermined range, such that the transmitting end determines, based on the indication value, a period of the receiving end reporting a channel quality index and the number of channel quality indexes to be transmitted each time.

According to another aspect of the present disclosure, an apparatus for a transmitting end of wireless communications is further provided, which includes: a receiving unit, configured to receive, from a receiving end, information of an indication value based on a root mean square wave number spread and a moving speed; a determining unit, configured to determine, based on the indication value, a period of the receiving end reporting a channel quality index and the number of channel quality indexes to be transmitted each time; and a transmitting unit, configured to transmit, to the receiving end, information related to the period of reporting the channel quality index and the number of channel quality indexes.

According to another aspect of the present disclosure, a method for a transmitting end of wireless communications is further provided, which includes: receiving, from a receiving end, information of an indication value based on a root mean square wave number spread and a moving speed; determining, based on the indication value, a period of the receiving end reporting a channel quality index and the number of channel quality indexes to be transmitted each time; and transmitting, to the receiving end, information related to the period of reporting the channel quality index and the number of channel quality indexes.

With the above apparatus and methods for a transmitting end and a receiving end of wireless communications according to the present disclosure, a reporting manner of the channel quality index can be changed adaptively based on the indication value based on the root mean square wave number spread and the moving speed, thereby effectively saving resources for channel feedback.

According to other aspects of the present disclosure, there are further provided computer program codes and computer program products for a method for wireless communications, a method for a transmitting end and a receiving end of wireless communications, and a method for optimizing a parameter in an effective signal-to-noise ratio mapping algorithm as well as a computer-readable storage medium recording the computer program codes for implementing the methods.

These and other advantages of the present disclosure will be more apparent by illustrating in detail a preferred embodiment of the present invention in conjunction with accompanying drawings below..

## BRIEF DESCRIPTION OF THE DRAWINGS

To further set forth the above and other advantages and features of the present invention, detailed description will be made in the following taken in conjunction with accompanying drawings in which identical or like reference signs designate identical or like components. The accompanying drawings, together with the detailed description below, are incorporated into and form a part of the specification. It should be noted that the accompanying drawings only illustrate, by way of example, typical embodiments of the present invention and should not be construed as a limitation to the scope of the invention. In the accompanying drawings:

Figure 1 is a block diagram of a structure of an apparatus for wireless communications according to an embodiment of the present disclosure;

Figure 2 is a block diagram of a structure of a channel predicting unit according to an embodiment of the present disclosure;

Figure 3 is a block diagram of a structure of an effective signal-to-noise ratio predicting unit according to an embodiment of the present disclosure;

Figure 4 is a block diagram of a structure of an apparatus for wireless communications according to another embodiment of the present disclosure;

Figure 5 is a block diagram of a structure of an apparatus for a transmitting end of wireless communications according to an embodiment of the present disclosure;

Figure 6 shows an example of a table used by a determining unit;

Figure 7 is a block diagram of a structure of an apparatus for a receiving end of wireless communications according to an embodiment of the present disclosure;

Figure 8 is a block diagram of a structure of an apparatus for optimizing a parameter in an effective signal-to-noise ratio mapping algorithm according to an embodiment of the present disclosure;

Figure 9 is a flowchart of a method for wireless communications according to an embodiment of the present disclosure;

Figure 10 is a flowchart of sub-steps of step S13 in Figure 9;

Figure 11 is a flowchart of a method for optimizing a parameter in an effective signal-to-noise ratio mapping algorithm according to an embodiment of the present disclosure;

Figure 12 is a flowchart of a method for a transmitting end of wireless communications according to an embodiment of the present disclosure;

Figure 13 is a flowchart of a method for a receiving end of wireless communications according to an embodiment of the present disclosure;

Figure 14 is a diagram showing an example of an information flow between a transmitting end and a receiving end; and

Figure 15 is an exemplary block diagram illustrating the structure of a general purpose personal computer capable of realizing the method and/or device and/or system according to the embodiments of the present invention.

**DETAILED DESCRIPTION OF EMBODIMENTS**

An exemplary embodiment of the present invention will be described hereinafter in conjunction with the accompanying drawings. For the purpose of conciseness and clarity, not all features of an embodiment are described in this specification. However, it should be understood that multiple decisions specific to the embodiment have to be made in a process of developing any such embodiment to realize a particular object of a developer, for example, conforming to those constraints related to a system and a business, and these constraints may change as the embodiments differs. Furthermore, it should also be understood that although the development work may be very complicated and time-consuming, for those skilled in the art benefiting from the present disclosure, such development work is only a routine task.

Here, it should also be noted that in order to avoid obscuring the present invention due to unnecessary details, only a device structure and/or processing steps closely related to the solution according to the present invention are illustrated in the accompanying drawing, and other details having little relationship to the present invention are omitted.

<First Embodiment>

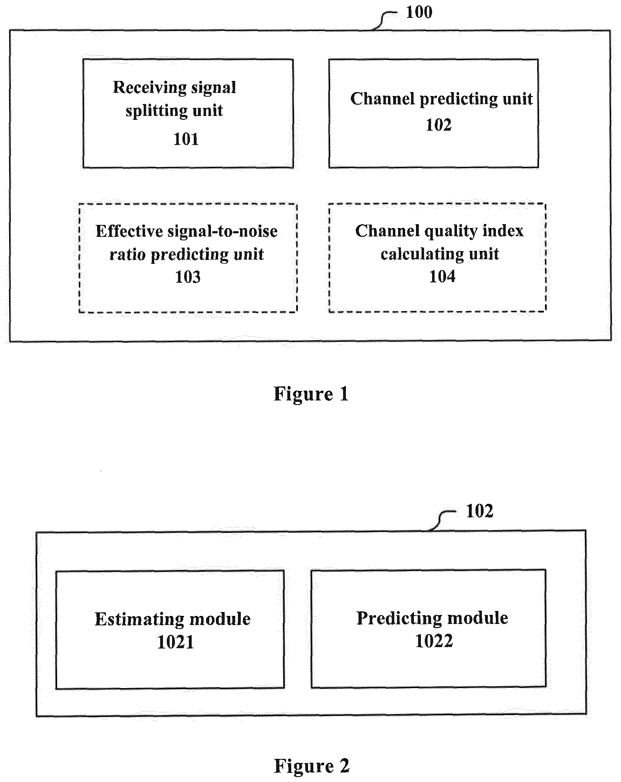

Figure 1 is a block diagram of a structure of an apparatus 100 for wireless communications according to an embodiment of the present disclosure. The apparatus 100 includes a receiving signal splitting unit 101 and a channel predicting unit 102. The receiving signal splitting unit 101 is configured to perform spatial splitting on a signal received through multi-antenna to obtain a plurality of spatially split signals respectively. The channel predicting unit 102 is configured to perform, based on the plurality of spatially split signals, channel prediction in respectively spaces respectively.

The apparatus 100 is located in a device serving as a receiving end of wireless communications. The device may be, for example, a user equipment, or the device is located in a user equipment. The user equipment is, for example, a mobile terminal (such as a smart phone, a tablet personal computer (PC), a notebook PC, a portable game terminal, a portable/dongle type mobile router and a digital camera device) served by a base station or a vehicle-mounted terminal (such as a car navigation device). The user equipment may also be implemented as a terminal (which is also called a machine type communication (MTC) terminal) performing machine-to-machine (M2M) communication. In addition, the user equipment may be a wireless communication module (such as an integrated circuit module including a single wafer) mounted on each of the above terminals. In addition, the apparatus 100 may also be located in a base station serving as a receiving end of wireless communications. The base station may be implemented as any type of evolved Node B (eNB). Instead, the base station may be implemented as any other type of base station such as a NodeB and a base transceiver station (BTS). The base station may include: a main body (which is also referred to as a base station device) configured to control wireless communications; and one or more remote radio heads (RRH) arranged in a position different from that of the main body. In addition, any type of terminal device may operate as a base station by performing a base station function temporarily or semi-permanently.

More generally, the apparatus 100 according to the present disclosure is not limited to be applied to a cellular mobile communication system, and not limited to an existing wireless communication standard, but may be applied to any communication system using multi-antenna as receiving antenna (which is also referred to as an array antenna hereinafter).

In the apparatus 100, spatial splitting is performed on a received signal by the receiving signal splitting unit 101. Since the spatially split signals have strong time correlation, the channel predicting unit 102 for performing channel prediction on each of spaces based on the spatially split signals has a high predicting accuracy and robustness.

In an example, the receiving signal splitting unit 101 includes a filter bank. The filter bank includes multiple filters with filtering spaces orthogonal to each other and is configured to perform spatially orthogonal splitting filtering on a signal received through multi-antenna, to obtain a plurality of spatially orthogonal splitting filtered signals. The channel predicting unit 102 is configured to perform, based on the plurality of spatially orthogonal splitting filtered signals, channel prediction in respective orthogonal filtering space respectively.

After the signal is received through the array antenna, the filter bank performs spatially orthogonal splitting filtering on the received signal. Specifically, the filter bank includes a plurality of filters with filtering spaces orthogonal to each other. For example, the number of the filters depends on the number N of receiving antennas, and a filtering process may be expressed by following equation (1).

$$\mathbf{r} = \mathbf{F}\mathbf{y} \quad (1)$$

Where y indicates a vector of a received signal with a length N, r indicates a vector of a filtered signal with the length N, and F indicates a spatially orthogonal splitting filtering matrix with a size N*N, where elements on a k-th row

5

of the spatially orthogonal splitting filtering matrix correspond to coefficients of a k-th filter and has a length N. The coefficients of each filter may be determined, for example, using a method such as a minimum equivalent wave number spectrum spreading. For example, the coefficients of the filters may be determined based on a shape of the receiving antenna array without estimating an arrival angle, and the coefficients may be obtained in advance by offline calculation.

As an example, for a linear array antenna (the number of antennas is N), in a case of determining coefficients of the used N filters by the minimum equivalent wave number spectrum spreading method, the optimization may be performed according to the following equation (2), to obtain an optimized initial offset angle of an angle spectrum of each filter.

$$[\theta_1^{opt} \ \theta_2^{opt} \ ... \ \theta_{N-1}^{opt}] = \arg \min_{0<\theta_1<...<\theta_{N-1}<\pi} \{\sigma_{k,\tilde{h}}^2\} \qquad (2)$$

Where $\theta_n^{opt}$ indicates an optimized initial offset angle of an angle spectrum corresponding to the n-th filter,

$$\sigma_{k,\tilde{h}}^2 = \frac{1}{\pi} \sum_{n=1}^{N} \alpha_n \sigma_{k,n}^2 \ , \ in$$

where in the equation:

$$\sigma_{k,n}^2 = \frac{\int_{-\infty}^{+\infty} (k-\overline{k})^2 S_{h_n^s}(k)dk}{\int_{-\infty}^{+\infty} S_{h_n^s}(k)dk}$$

$$= k_0^2 \left( \left[ \frac{1}{2} \left( 1 + \frac{1}{\alpha_n} \left( \sin(\alpha_n)\cos(2\theta_n + \alpha_n) \right) \right) \right] - \frac{1}{\alpha^2} \left[ \left( \sin(\theta_n) - \sin(\theta_n + \alpha_n) \right)^2 \right] \right) \qquad (3)$$

Where, $\sigma_{k,n}^2$ indicates a root mean square wave number spread corresponding to the n-th filter, $\alpha_n$ and $\theta_n$ respectively indicate a width and an initial offset angle of an angle spectrum corresponding to the n-th filter, where $k_0 = 2\pi/\lambda$, $\lambda$ indicates a wavelength.

After the optimized initial offset angle $\theta_n^{opt}$ is obtained, the coefficients of an optimal spatial filter may be calculated using a common linear array beam pattern synthesis method. For example, the optimal spatial filtering coefficients $b_q$ may be calculated using a Fourier series method, which is expressed by the following equation (4):

$$b_q^n = \Delta_r \int_{-1/2\Delta_r}^{1/2\Delta_r} U^n(u)e^{-j2\pi uq\Delta_r} du \qquad (4)$$

Where $U^n(u)$ indicates an array beam pattern corresponding to the n-th optimal spatial filter, which may be determined by $\theta_n^{opt}$ and $\theta_{n-1}^{opt}$. $b_q^n$ indicates a q-th series coefficient of the n-th optimal spatial filter, where $\Delta_r = L_r/N$, $L_r$ indicates a normalized length of a receiving antenna.

In another example, the coefficients of each filter are set such that the arrival angle of a spatially orthogonal splitting filtered signal corresponding to the filter is limited to a range corresponding to the filter. In implementation, various splitting methods may be used to respectively split different ranges of arrival angles for the filters. For example, a range between 0 and $\pi$ are equally split for the arrival angles. The coefficients of each filter are determined based on each of the ranges with any existing method for determining coefficients of filters (such as the above-described linear array beam pattern synthesis method or the like), which is not described herein.

After the received signal passes through the filter bank, a plurality of spatially orthogonal splitting filtered signals are obtained. That is, the filter bank 101 spatially splits the received signal into a plurality of signals. The channel predicting unit 102 performs channel prediction on each of the obtained multiple spatially orthogonal splitting filtered signals respectively, for example, to compensate for an influence on the performance of the system due to a feedback delay in obtaining a channel quality index parameter based on the channel prediction.

It is to be understood that an accurate channel prediction leads to an accurate feedback of the subsequently obtained channel quality index parameter. When the feedback is accurate, the modulation manner, the encoding efficiency and the like determined based on the feedback are suitable to conditions of the channel, thereby maximizing a throughput rate of the system while ensuring a communication quality.

The channel predicting unit 102 may adopt various channel predicting algorithms, including but not limited to a linear extrapolation algorithm, a cubic spline interpolation algorithm and the like. Since the spatially orthogonal splitting filtered signals have strong time correlation, the channel predicting unit 102 has a higher predicting accuracy and robustness.

In an example, as shown in Figure 2, the channel predicting unit 102 may include an estimating module 1021 and a predicting module 1022. The estimating module 1021 is configured to estimate an equivalent channel parameter of each orthogonal filtering space based on each spatially orthogonal splitting filtered signal. The predicting module 1022 is configured to perform channel prediction on each filtering space based on the equivalent channel parameter estimated by the estimating module 1021, respectively.

Since the channel estimation and the channel prediction are performed for each of the orthogonal filtering spaces respectively while the described channel is not the actual channel, the estimated channel parameter and signal-to-noise ratio (SNR) are referred to as an equivalent channel parameter and an equivalent signal-to-noise ratio. The channel estimating method may be a training pilot-based channel estimating method or a blind channel estimating method. A multi-path channel parameter of each of the orthogonal filtering spaces may be expressed by the following equation (5).

$$\mathbf{h}_k = [\mathbf{h}_{0,k} \quad \mathbf{h}_{1,k} \quad \mathrm{L} \quad \mathbf{h}_{L-1,k}] \tag{5}$$

Where, $\mathbf{h}_{i,k} = [h_{i,k}(0) \; h_{i,k}(1) \; \mathrm{L} \; h_{i,k}(M-1)]$, $\mathbf{h}_{i,k}(n)$ indicates a channel coefficient of an i-th multipath in a k-th (k=1,..., N) orthogonal filtering space at an n-th (n=0,..., M-1) sampling time, L indicates the number of multipaths which is related to the channel environment, and M indicates a length of a frame. Multipath means that the received signal is a weighted copy of multiple transmitted signals subjected to different delays due to multiple reflectors existed in the wireless channel.

After the estimating module 1021 obtains the above channel parameter through channel estimation, the predicting module 1022 predicts a future wireless channel parameter in each of the orthogonal filtering spaces using the channel predicting algorithm respectively, to compensate for the influence on the performance of the system due to the feedback delay of the channel quality index parameter.

Next, the future wireless channel parameter is predicted using the channel predicting algorithm to compensate for the influence on the performance of the system due to the feedback delay of the channel quality index parameter. As described above, the prediction may be performed using various channel predicting algorithms. An example where the linear extrapolation channel predicting algorithm is used as the channel predicting algorithm is described below, but it should be understood that this is merely exemplary rather than restrictive. The linear extrapolation channel predicting algorithm has characteristics such as a low complexity and a robust performance, as shown in the following equation (6):

$$\overset{\text{o}}{h}_{i,k}(n) = h_{i,k}(M-2) + (n-M+2)\left(h_{i,k}(M-1) - h_{i,k}(M-2)\right) \tag{6}$$

Where, $\overset{\text{o}}{h}_{i,k}(n)$ indicates a predicted channel coefficient of the i-th multipath in the k-th orthogonal filtering space at the n-th sampling time.

The apparatus 100 may obtain an accurate predicting result by performing channel prediction in each of the orthogonal filtering spaces, thereby improving the throughput rate of the wireless communication system in a fast time varying channel.

As shown by dashed line blocks in Figure 1, the apparatus 100 may further include an effective signal-to-noise ratio predicting unit 103 and a channel quality index calculating unit 104. The effective signal-to-noise ratio predicting unit 103 is configured to predict an effective signal-to-noise ratio of the received signal based on a channel predicting result obtained by the channel predicting unit 102. The channel quality index calculating unit 104 is configured to calculate a channel quality index (CQI) based on the effective signal-to-noise ratio.

Since the signal-to-noise ratio may still change within a range of a frame in a fast time-varying channel environment, it is required to measure the channel quality using an effective signal-to-noise ratio. The effective signal-to-noise ratio may be obtained, for example, using an effective signal-to-noise ratio mapping algorithm based on the predicted signal-to-noise ratios within a frame, where the predicted signal-to-noise ratio is obtained based on the channel predicting result. The effective signal-to-noise ratio indicates the predicted channel quality. Therefore, in order to obtain an accurate channel quality index, it is desirable to achieve an accurate prediction on the effective signal-to-noise ratio.

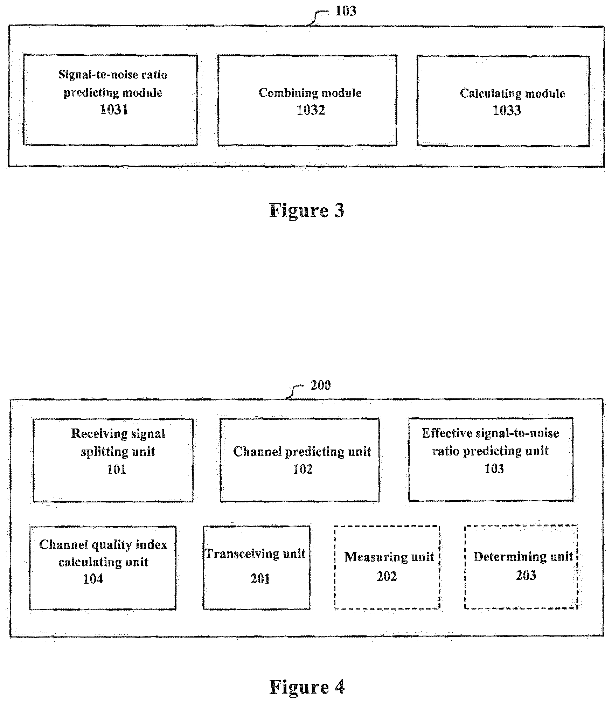

In an example, as shown in Figure 3, the effective signal-to-noise ratio predicting unit 103 includes a signal-to-noise ratio predicting module 1031, a combining module 1032 and a calculating module 1033. The signal-to-noise ratio predicting module 1031 is configured to predict a signal-to-noise ratio of each of the spatially orthogonal splitting filtered signals based on the channel predicting result. The combining module 1032 is configured to combine the predicted signal-to-noise ratios of the spatially orthogonal splitting filtered signals to obtain an equivalent combining signal-to-noise ratio. The calculating module 1033 is configured to calculate the effective signal-to-noise ratio based on the equivalent combining signal-to-noise ratio.

Taking the predicted equivalent channel parameter obtained by the equation (6) as an example, the signal-to-noise ratio predicting module 1031 may calculate a predicted signal-to-noise ratio of each of the spatially orthogonal splitting filtered signals according to the following equation (7).

$$SNR_{i,k}^{p}(n) = \frac{h_{i,k}^{p}(n)}{\sum_{t=0}^{M-1} h_{i,k}^{2}(n_0+t)} \sum_{t=0}^{M-1} SNR_{i,k}(n_0+t) \tag{7}$$

Where, $n_0$ indicates an initial sampling time of a signal frame for measuring a signal-to-noise ratio, $SNR_{i,k}(n_0+t)$ indicates an estimation value of a signal-to-noise ratio obtained by measuring the received signal, and $SNR_{i,k}^{p}(n)$ indicates the predicated signal-to-noise ratio of a signal of the i-th multipath in the k-th orthogonal filtering space at the n-th sampling time.

Next, the combining module 1032 calculates a signal-to-noise ratio of a combined signal, that is, an equivalent combining signal-to-noise ratio, based on the obtained predicted signal-to-noise ratios in the orthogonal filtering spaces. The calculation method used by the combining module 1032 is related to the used combining algorithm, and the combining module 1032 may perform the combination using one of the following combining methods: a maximum ratio combining, an equal gain combining, a selective combining and the like. For example, it may be considered that noise variances in the orthogonal filtering spaces are approximately equal to each other, so the finally obtained signal-to-noise ratio of the combined signal may be calculated using the predicted signal-to-noise ratios of the spatially orthogonal splitting filtered signals.

As an example, in a case where the maximal ratio combining is adopted, the equivalent combining signal-to-noise ratio may be calculated according to the following equation (8).

$$SNR^{p}(n) = \sum_{k=1}^{N} \sum_{i=1}^{L} SNR_{i,k}^{p}(n) \tag{8}$$

Next, the calculating module 1033 calculates the effective signal-to-noise ratio based on the equivalent combining signal-to-noise ratio. The calculating module 1033 may calculate the effective signal-to-noise ratio using an effective signal-to-noise ratio mapping algorithm based on the equivalent combining signal-to-noise ratios within the frame. Examples of the effective signal-to-noise ratio mapping algorithms include an exponential effective signal-to-noise ratio mapping algorithm and a mutual information effective signal-to-noise ratio mapping algorithm, but the present disclosure is not limited thereto. Description is made by taking the mutual information effective signal-to-noise ratio mapping algorithm as an example below.

The effective signal-to-noise ratio is calculated using the mutual information effective signal-to-noise ratio mapping algorithm according to the following equation (9).

$$SNR_{eff} = \beta \bullet I^{-1}\left[\frac{1}{M} \bullet \sum_{n=1}^{M} I\left(\frac{SNR^{p}(n)}{\beta}\right)\right] \qquad (9)$$

Where, $SNR_{eff}$ indicates an effective signal-to-noise ratio obtain by calculating, $\beta$ indicates a parameter that is required to be optimized offline in advance in the algorithm. $I(\bullet)$ indicates a compression function for mapping the signal-to-noise ratio and is used to calculate a mutual information amount. $I(\bullet)$ may perform an operation using a well-known numerical calculating method, which is not described in detail herein.

It can be seen that the effective signal-to-noise ratio is obtained based on the channel predicting result for each of the orthogonal filtering spaces. Since the channel predicting result for each of the orthogonal filtering spaces is accurate and robust, the effective signal-to-noise ratio predicted herein also has a high accuracy.

After the effective signal-to-noise ratio is obtained, the channel quality index calculating unit 104 may obtain the CQI parameter based on the effective signal-to-noise ratio, for example, in a table looking up manner. The parameters in the table may be signal-to-noise ratio thresholds corresponding to different CQI values. The table may be obtained through off-line computer simulation under a Gaussian white noise channel condition. Specifically, the channel quality index calculating unit 104 may calculate a CQI parameter to be reported according to the following equation (10).

$$CQI = \arg\min_{i} \left\{\left|SNR_{eff} - SNR_{i}^{Th}\right|\right\}, \quad i = 1,2,\mathrm{L}\ Q \qquad (10)$$

Where, $SNR_{i}^{Th}$ indicates a value of a signal-to-noise ratio obtained through off-line simulation under the Gaussian white noise channel condition in a case of using the modulation parameter and the encoding efficiency corresponding to the i-th CQI value with a frame error rate of 10%, and Q indicates the number of CQI values in the table.

In other words, the equation (10) indicates that a CQI corresponding to a $SNR_{i}^{Th}$ closest to the $SNR_{eff}$ is selected.

In the present embodiment, the apparatus 100 performs channel prediction based on the spatially orthogonal splitting filtered signals respectively, such that an accurate channel predicting result can be obtained by utilizing the strong time correlation of the spatially orthogonal splitting filtered signals, thereby obtaining a more accurate channel quality index, and thus improving the throughput rate of the wireless communication system in a fast time varying channel environment.

<Second Embodiment

In the apparatus 100, the calculating module 1033 is required to optimize the parameter $\beta$ in the algorithm before calculating the effective signal-to-noise ratio, which generally requires a large amount of computer simulation in the conventional technology. This is because, ideally, it is required to perform computer simulation by traversing all possible wireless channel implementations to obtain the symbol error rate performances in environments of all the wireless channel implementations, then optimize the parameter through a certain optimization criteria. Taking the minimum mean square error optimization criterion as an example, the optimization process may be expressed by the following equation (11).

$$\hat{\beta} = \arg\min_{\beta} \sum_{i=1}^{Y} (BLER_{pred,i}(\beta) - BLER_{sim,i})^2 \qquad (11)$$

Where, $\hat{\beta}$ indicates an optimization value of the parameter $\beta$, Y indicates the number of channel implementations used to optimize the parameter $\beta$, and $BLER_{pred,i}(\beta)$ indicates a block error rate corresponding to the i-th channel implementation predicated using the effective signal-to-noise ratio mapping algorithm by looking up the table, $BLER_{sim,i}$ indicates an actual block error rate corresponding to the i-th channel implementation obtained by computer simulation. In a case where $BLER_{pred,i}(\beta)$ and $BLER_{sim,i}$ are closest, $\beta$ is optimal. Since a total effect for Y channels is calculated here, "optimal" here means statistically optimal.

Generally, since there are many cases for channel implementations, a large number Y of channel implementations are required to make the parameter $\beta$ to be statistically optimal. Therefore, a large amount of calculation are required in this method, and the obtained optimal $\beta$ is an optimal parameter in a statistically average sense, which is not necessarily an optimal parameter for a single channel, thereby affecting the performance of the system.

In order to reduce complexity of parameter optimization and improve a performance of the parameter optimization, an optimizing method based on a first order autoregressive channel model is provided in the embodiment.

Specifically, in a case where the calculating module 1033 performs calculation using the mutual information effective signal-to-noise ratio mapping algorithm, the calculating module 1033 optimizes the parameter in the mutual information effective signal-to-noise ratio mapping algorithm using a first order auto-regressive channel model. The optimization may be performed offline in advance, or may be performed online. With the first order autoregressive channel model, only one channel implementation may be generated and the parameter $\beta$ may be optimized using the channel implementation. In this case, Y in equation (11) is 1. In other words, the obtained parameter optimization value $\hat{\beta}$ is optimal for the channel implementation, rather than the above-described statistical optimal in the conventional technology, such that a more accurate effective signal-to-noise ratio can be obtained, thereby obtaining a more accurate channel quality index value, and thus further improving the throughput rate of the system.

For example, the calculating module 1033 creates the first order autoregressive channel model for each of the orthogonal filtering spaces, combines the first order autoregressive channel models into an equivalent first order autoregressive channel model, and optimize the above parameter $\beta$ using the equivalent first order autoregressive channel model. The coefficient of the first order autoregressive channel model is based on the filtering coefficients of the filter in the corresponding orthogonal filtering space.

The above processing may be expressed by the following equations (12) to (17).

$$h_k(n+1) = \alpha_k h_k(n) \qquad (12)$$

Equation (12) represents a simplified first order autoregressive channel model for the k-th orthogonal filtering space. The coefficient of the first order autoregressive channel model may be indicated by a zero order first class Bessel function which takes a maximum Doppler Shift corresponding to a signal in the corresponding orthogonal filtering space as a variable. For example, the coefficient $\alpha_k$ may be expressed as follows:

$$\alpha_k = J_0(2\pi f_{d,k} T_s) \qquad (13)$$

Where, $J_0(\cdot)$ indicates a zero order first class Bessel function, $f_{d,k}$ indicates a maximum Doppler Shift corresponding to a signal in the k-th orthogonal filtering space, and Ts indicates a symbol period.

In the case of filtering the received signal using the filter bank 101, $\alpha_k$ may be expressed as follows:

$$\alpha_k = J_0(2\pi f_{d,k} T_s) = J_0\left(vT_s\left(\frac{2\pi\cos(\theta_k)}{\lambda} - \overline{w_k}\right)\right) \qquad (14)$$

Where, $\theta_k$ indicates a parameter of the k-th filter, and means that a range of an arrival angle of a signal defined by the k-th filter is: $\theta_{k-1} < \theta < \theta_k$, $\lambda$ indicates a wavelength of a carrier wave, and v indicates a relative moving speed between the receiving end and the transmitting end of the communication. $\overline{w_k}$ indicates a mean value of wave number corresponding to the k-th filter and is expresses as follows:

$$\overline{w_k} = \frac{\int_{-\infty}^{+\infty} wS_k(w)dw}{\int_{-\infty}^{+\infty} S_k(w)dw} \qquad (15)$$

Where, $S_k(w)$ indicates a wave number spectrum calculated based on the angle spectrum $\rho_k(\theta)$ corresponding to a shape of the antenna array and the parameter of the k-th filter according to the following equation.

$$S_k(w) = \rho_k(\theta)\left|\frac{d\theta}{dw}\right| = \frac{1}{\sqrt{w_0^2 - w^2}}\,\rho_k(\theta) = \frac{1}{w_0\left|\sin\left(\theta - \theta_R\right)\right|}\,\rho_k(\theta) \qquad (16)$$

Where, $w_0 = 2\pi/\lambda$, $\theta_R$ indicates a direction angle of movement.

In a case of using the optimal spatially orthogonal splitting filter bank, $\alpha_k$ of the orthogonal filtering spaces are approximately equal to each other. In a case of using the maximum ratio combining algorithm, a channel implementation ultimately used to evaluate and optimize the parameter $\beta$ in the effective signal-to-noise ratio algorithm may be expressed as:

$$h(n) = \sum_{k=1}^{N} h_k^2(n) = \sum_{k=1}^{N} \alpha_k^2 h_k^2(n-1) \approx \overline{\alpha}^2 \sum_{k=1}^{N} h_k^2(n-1) = \overline{\alpha}^2 h(n-1) \qquad (17)$$

Where, $\overline{\alpha}^2 = \frac{1}{N}\sum_{k=1}^{N}\alpha_k^2$. In other words, in a case of using the maximum ratio combining algorithm, the obtained coefficient of the equivalent first order autoregressive channel model is a mean value of the squares of coefficients of the first order autoregressive channel models of the orthogonal filtering spaces. It should be understood that although the maximum ratio combining algorithm is used here, other combining algorithms may also be used, such as the above-described equal-gain combining and selective combining or the like.

The apparatus 100 according to the embodiment optimizes the parameter in the mutual information effective signal-to-noise ratio mapping algorithm using a channel implementation based on an equivalent first order autoregressive channel model, thereby improving a performance of parameter optimization while reducing an amount of simulation computation, and thus further improving the throughput rate of the system.

<Third Embodiment

Figure 4 is a block diagram of a structure of an apparatus 200 for wireless communications according to another embodiment of the present disclosure. Besides the units described with reference to the first embodiment, the apparatus 200 further includes a transceiving unit 201 configured to transmit a channel quality index to a device communicating with the apparatus 200.

In the embodiment, the transceiving unit 201 provides a channel quality index to a device communicating with the apparatus, such that the device determines, for example, a modulation manner and an encoding efficiency. In addition, the transceiving unit 201 may further be configured to receive information related to a period of transmitting the channel quality index and the number of channel quality indexes to be transmitted each time from the device. In this case, the apparatus 200 transmits the channel quality index to the device based on the received information related to the number and the information. For example, the transmitting period of the channel quality index may be one frame or several frames. In a case where the transmitting period is several frames, the number of channel quality indexes may be equal to or less than the number of frames persistent during the transmitting period, that is, all CQIs on the persistent frames or only a portion of the CQIs are transmitted in the transmitting period. For example, if the transmitting period is 4 frames, 4 CQIs may be transmitted, or only 2 CQIs such as the first two CQIs may be transmitted. The number of transmitted channel quality indexes may be referred to as a predicted depth. In a case where it is agreed that the number of reported CQIs is the same as the number of frames persistent during a reporting period, the above-described information received by the transceiving unit 201 may include only information related to the reporting period.

In addition, as shown by dashed line blocks in Figure 4, the apparatus 200 may further include a measuring unit 202 and a determining unit 203. The measuring unit 202 is configured to periodically measure a root mean square wave number spread and a moving speed of the apparatus 200. The determining unit 203 is configured to determine whether the change of the indication value based on the root mean square wave number spread and the moving speed exceeds a predetermined range. The transceiving unit 201 is further configured to transmit the indication value to the device in a case where the determining unit 203 determines that the change exceeds the predetermined range, such that the device determines, based on the indication value, the period of the apparatus 200 reporting the channel quality index and the number of channel quality indexes to be transmitted each time.

In this example, the root mean square wave number spread measured by the measuring unit 202 reflects a variation degree of the channel. The indication value based on the root mean square wave number spread and the moving speed reflects a channel environment. The change of the indication value reflects a change of the channel environment. In a case where the change exceeds the predetermined range, it means that the channel environment has a significant change, and it may be required to adjust the reporting period of the CQI and the number of the CQIs. Therefore, the transceiving unit 201 reports the indication value at this time to the device communicating with the apparatus 200. The period of measuring by the measuring unit 202 determines a real-time nature of the indication value. A shorter period leads to a more timely updated indication value.

The device may determine the reporting period and the predicting depth of the CQI based on the indication value. For example, an increased indication value indicates an improved time varying degree of the channel. Therefore, it is required to more frequently report the CQI and reduce the predicting depth. This is because a prediction with a long period is not significant in this case. For example, the above device may determine the reporting period and the predicting depth of the CQI based on the indication value through a table looking up manner, which is described in detail later.

In an example, the indication value is a product of the root mean square wave spread and a square value of the moving speed. The moving speed v may be obtained through measurement.

For the k-th orthogonal filtering space, the root mean square wave number spread may be expressed as:

$$\sigma_k^2 = \frac{\int_{-\infty}^{+\infty} (w - \overline{w}_k)^2 S_k(w)dw}{\int_{-\infty}^{+\infty} S_k(w)dw} \tag{18}$$

Where, the definitions of $S_k(w)$ and $\overline{w}_k$ are as shown in equations (16) and (15) described above respectively. In an example, the measuring unit 202 may be configured to take a root mean square wave number spread corresponding to a signal with a highest power among the spatially orthogonal splitting filtered signals as the above root mean square wave number spread; or take a weighted sum of root mean square wave number spreads as the root mean square wave number spread, where each of the root mean square wave number spreads is weighted using a power of a spatially orthogonal splitting filtered signal in an orthogonal filtering space corresponding to the root mean square wave number spread. In the latter case, the finally obtained root mean square wave number spread may be expressed as follows:

$$\sigma^2 = \frac{\sum_{k=1}^{N} P_k \sigma_k^2}{\sum_{k=1}^{N} P_k} \tag{18}$$

Where $P_k$ indicates a power of a signal corresponding to the k-th orthogonal filtering space.

In the embodiment, the apparatus 200 may adaptively change the reporting period and the reported number of the CQI based on the current wireless channel environment, thereby effectively saving resources for channel feedback while ensuring the communication quality.

<Fourth Embodiment

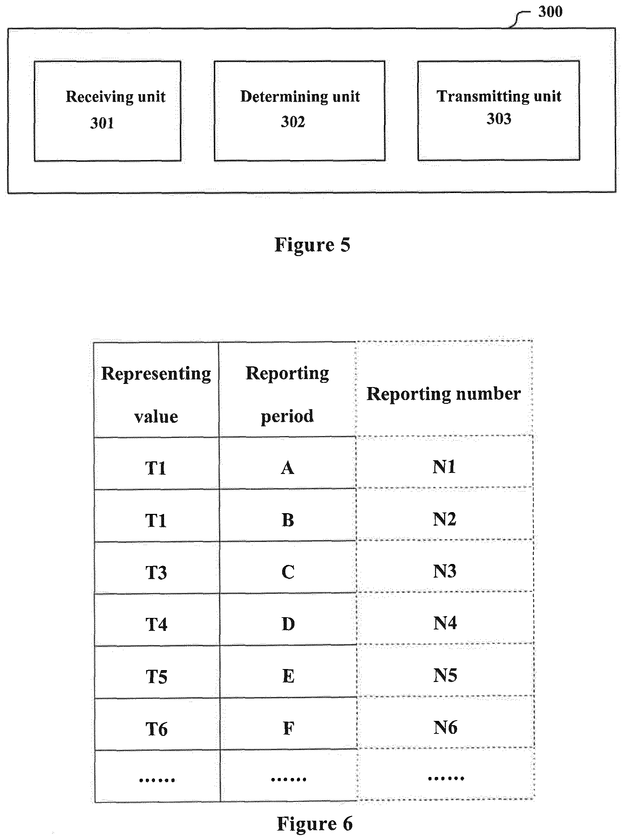

Figure 5 is a block diagram of a structure of an apparatus 300 for wireless communications according to an embodiment of the present disclosure. The apparatus 300 includes a receiving unit 301, a determining unit 301 and a transmitting unit 303. The receiving unit 301 is configured to receive an indication value based on a root mean square wave number spread and a moving speed from a receiving end. The determining unit 302 is configured to determine, based on the indication value, the period of the receiving end reporting the channel quality index and the number of channel quality indexes to be transmitted each time. The transmitting unit 303 is configured to transmit information related to the period of reporting the channel quality index and the number of channel quality indexes to the receiving end.

The above-described indication value may be, for example, a product of the root mean square wave number spread and a square value of the moving speed, but the present disclosure is not limited thereto. An example of the root mean square wave number spread is described in the third embodiment and is not repeated here.

The determining unit 302 may determine the period of the receiving end reporting the channel quality index based on the indication value by using, for example, a table looking up manner. In an example, the determining unit 302 selects a reporting period corresponding to a representing value closest to the indication value by comparing the indication value with multiple representing values. In addition, the determining unit 302 may also select the number of the channel quality indexes to be transmitted each time at the same time. Alternatively, the determining unit 302 may determine the number of the channel quality indexes to be transmitted each time after the reporting period is determined.

The above representing values may be determined through simulation based on corresponding system parameters. Figure 6 shows an example of a table that the determining unit 302 may use. In Figure 6, the first column shows the representing values to be compared with a threshold value, the second column shows the reporting period of the CQI, such as the number of persistent frames, and the third column shows the number of reported CQIs, where the third column is optional. For example, in a case where the indication value is closest to a representing value T3, the determining unit 302 determines that the reporting period and number are c and N3, respectively. The transmitting unit 303 transmits information related to c and N3 to the receiving end.

To be understood, in a case where it is agreed that the number of reported CQIs is the same as the number of frames persistent in the reporting period, the determining unit 302 may only determine the reporting period, and the transmitting unit 303 may only transmit the information related to the reporting period, which may further reduce signaling overhead.

The apparatus 300 may be located, for example, in a base station. The base station may be implemented as any type of evolved Node B (eNB). Instead, the base station may be implemented as any other type of base station such as NodeB and a base transceiver station (BTS). The base station may include: a main body (which is also referred to as a base station device) configured to control wireless communications; and one or more remote radio heads (RRH) arranged in a position different from that of the main body. In addition, any type of terminal device may operate as a base station by performing a base station function temporarily or semi-permanently. However, this is merely exemplary, and the apparatus 300 may be applied to any wireless transmitter performing link adaptation operation.

The apparatus 300 according to the embodiment can appropriately select the period of the receiving end reporting the CQI and the predicting depth based on the wireless channel environment, thereby effectively saving the resources for channel feedback while ensuring the communication quality.

<Fifth Embodiment>

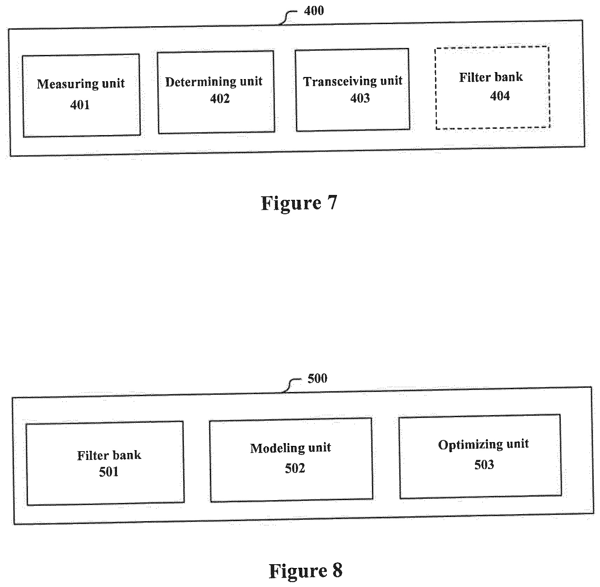

Figure 7 is a block diagram of a structure of an apparatus 400 for a receiving end of wireless communications according to an embodiment of the present disclosure. The apparatus 400 includes a measuring unit 401, a determining unit402 and a transceiving unit 403. The measuring unit 401 is configured to periodically measure the root mean square wave number spread and the moving speed of the apparatus 400. The determining unit 402 is configured to determine whether a change of the indication value based on the root mean square wave number spread and the moving speed exceeds a predetermined range. The transceiving unit 403 is configured to transmit the indication value to the transmitting end in a case where the determining unit 402 determines that the change exceeds the predetermined range, such that the transmitting end determines, based on the indication value, the period of the apparatus 400 reporting the channel quality index and the number of channel quality indexes to be transmitted each time.

The measuring unit 401, the determining unit 402 and the transceiving unit 403 have the same functions as the measuring unit 202, the determining unit 203 and the transceiving unit 201 in the third embodiment, respectively, and the description thereof is not repeated here.

In an example, the indication value may be, for example, a product of the root mean square wave number spread and a square value of the moving speed, but the present disclosure is not limited thereto. An example of the root mean square wave number spread is also described in the third embodiment and is not repeated here.

The transceiving unit 403 may further be configured to receive information related to the period of transmitting the channel quality index and the number of channel quality indexes to be transmitted each time from the transmitting end. In a case where it is agreed that the number of the transmitted CQIs is the same as the number of frames persistent in the transmitting period, the information received by the transceiving unit 403 may include only the information related to the transmitting period.

In an example, the apparatus 400 further includes a filter bank 404. The filter bank 404 includes a plurality of filters with filtering spaces orthogonal to each other and is configured to perform spatially orthogonal splitting filtering on a signal received through multi-antenna to obtain a plurality of spatially orthogonal splitting filtered signals. The measuring unit 401 is configured to take the root mean square wave number spread corresponding to a signal with the highest power in the spatially orthogonal splitting filtered signals as the root mean square wave number spread, or take a weighted sum of root mean square wave number spreads as the root mean square wave number spread, where each of the root mean square wave number spreads is weighted using the power of the spatially orthogonal splitting filtered signal in an orthogonal filtering space corresponding to the root mean square wave number spread.

The filter bank 404 has, for example, the same structure and function as the filter bank described in the first embodiment, and description thereof is not repeated here. In this example, the measuring unit 401 obtains a root mean square wave number spread for calculating the above-described indication value based on a root mean square wave number spread corresponding to each of the orthogonal filtering spaces.

The apparatus 400 may be located, for example, in a user equipment. The user equipment may be a mobile terminal (such as a smart phone, a tablet personal computer (PC), a notebook PC, a portable game terminal, a portable/dongle type mobile router and a digital camera) served by a base station, an onboard terminal (such as a car navigation device) or the like. The user equipment may also be implemented as a terminal (which is also referred to as a machine type communication (MTC) terminal) performing machine-to-machine (M2M) communication. In addition, the user equipment may be a wireless communication module (such as an integrated circuit module including a single wafer) mounted on each of the above terminals. However, this is merely exemplary, and the apparatus 400 may be applied to any wireless receiving end performing link adaptation operation.

The apparatus 400 according to the present embodiment can report the CQI with an appropriate period and predicted depth based on a wireless channel environment, thereby effectively saving the resources for channel feedback while ensuring the communication quality.

<Sixth Embodiment

Figure 8 is a block diagram of a structure of an apparatus 500 for optimizing a parameter in an effective signal-to-noise ratio mapping algorithm according to an embodiment of the present disclosure. The apparatus 500 includes a filter bank 501, a modeling unit 502 and an optimizing unit 503. The filter bank 501 includes a plurality of filters with filtering spaces orthogonal to each other and is configured to perform spatially orthogonal splitting filtering on a signal received through multi-antenna to obtain a plurality of spatially orthogonal splitting filtered signals respectively. The modeling unit 502 is configured to calculate a coefficient of a first order autoregressive channel model in each of the orthogonal filtering spaces using filtering coefficients of a filter corresponding the orthogonal filtering space, and combine the first order autoregressive channel models to obtain an equivalent first order autoregressive channel model. The optimizing unit 503 is configured to generate a wireless channel implementation utilizing the equivalent first order autoregressive channel model and optimize the above parameter (for example, the parameter $\beta$ described above) using the wireless channel implementation.

The filter bank 501 may have the same structure and function as the filter bank described in the first embodiment, and the modeling unit 502 may have the same structure and function as the calculating module 1033 described in the second embodiment, and the description thereof is not repeated here.

In an example, the optimizing unit 503 generates a wireless channel implementation using the equivalent first order autoregressive channel model created by the modeling unit 502, performs simulation on a symbol error rate performance when setting different channel quality parameters in the wireless channel environment, performs simulation on the symbol error rate performance when setting different channel quality parameters in a Gaussian white noise channel environment, and optimize the above parameter $\beta$ by making the two symbol error rates obtained by the simulations close to each other.

In the embodiment, the parameter $\beta$ in the effective signal-to-noise ratio mapping algorithm is optimized by using only one channel implementation, such that an amount of calculation and the complexity of the parameter optimization can be greatly reduced, and an parameter optimal for the channel implementation rather than statistically optimal can be obtained, thereby greatly improving the accuracy of the parameter optimization, and thus improving the throughput rate of the communication system.

<Seventh Embodiment

In the process of describing the apparatus for wireless communications in the embodiments described above, obviously, some processing and methods are also disclosed. Hereinafter, an overview of the methods is given without repeating some details disclosed above. However, it should be noted that, although the methods are disclosed in a process of describing the apparatus for wireless communications, the methods do not certainly employ or are not certainly executed by the aforementioned components. For example, the embodiments of the apparatus for wireless communications may be partially or completely implemented with hardware and/or firmware, the method for wireless communications described below may be executed by a computer-executable program completely, although the hardware and/or firmware of the electronic device can also be used in the methods.

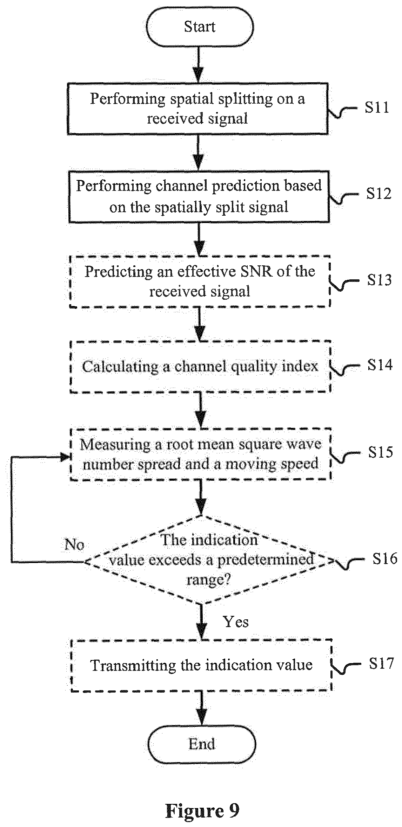

Figure 9 is a flowchart of a method for wireless communications according to an embodiment of the present disclosure. The method includes: performing spatial splitting on a signal received through multi-antenna to obtain a plurality of spatially split signals respectively (S11); and performing, based on the plurality of spatially split signals, channel prediction in respective spaces respectively (S12).

In an example, in step S11, spatially orthogonal splitting filtering are performed on the received signal by a filter bank including a plurality of filters with filtering spaces orthogonal to each other, to obtain a plurality of spatially orthogonal splitting filtered signals respectively. In step S12, channel prediction is performed in each of the orthogonal filtering spaces based on the plurality of spatially orthogonal splitting filtered signals.

Filtering coefficients of a filter is set such that an arrival angle of a corresponding spatially orthogonal splitting filtered signal is limited to a range corresponding to the filter. The range may be obtained by splitting in advance, for example, a range between 0 and $\pi$ is equally split.

In an example, step S12 may include: estimating, based on each of the spatially orthogonal splitting filtered signals, an equivalent channel parameter of a respective orthogonal filtering space; and performing, based on the equivalent channel parameter estimated by the estimating module, channel prediction in the respective orthogonal filtering space. For example, a channel predicting algorithm such as linear extrapolation or cubic spline interpolation may be used.

As indicated by dashed line blocks in Figure 9, the above method may further include the following steps of: predicting an effective signal-to-noise ratio of the receiving signal based on the obtained channel predicting result (S13); and calculating the channel quality index based on the effective signal-to-noise ratio (S14).

In step S14, the channel quality index may be calculated based on the effective signal-to-noise ratio by a table looking up manner.

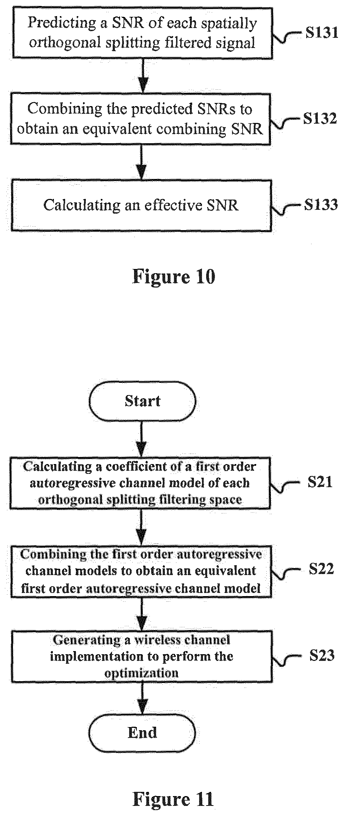

In an example, as shown in Figure 10, step S13 may include the following sub-steps: predicting a signal-to-noise ratio of each of the spatially orthogonal splitting filtered signals based on the channel predicting result (S131); combining the predicted signal-to-noise ratios of the spatially orthogonal splitting filtered signals to obtain an equivalent combining signal-to-noise ratio (S132); and calculating an effective signal-to-noise ratio based on the equivalent combining signal-to-noise ratio (S133).

For example, in step S132, the combination may be performed in one of the following combining manners: maximum ratio combining, equal gain combining and selective combining.

In step S133, the effective signal-to-noise ratio is calculated using an effective signal-to-noise ratio mapping algorithm based on the equivalent combining signal-to-noise ratios within a frame. For example, the calculation may be performed using a mutual information effective signal-to-noise ratio mapping algorithm, an exponential effective signal-to-noise ratio mapping algorithm and the like. In an example where the calculation is performed using the mutual information effective signal-to-noise ratio mapping algorithm, the parameter in the mutual information effective signal-to-noise ratio mapping algorithm may be optimized by a first order autoregressive channel model. The optimization may be performed offline in advance, or may be performed online in step S133.

For example, for each of the orthogonal filtering spaces, a first order autoregressive channel model may be created. The first order autoregressive channel models may be combined into an equivalent first order autoregressive channel model, and the parameter is optimized using the equivalent first order autoregressive channel model. A coefficient of the first order autoregressive channel model is based on filtering coefficients of a filter in an orthogonal filtering space corresponding to the first order autoregressive channel model. The coefficient of the first order autoregressive channel model may be indicated by a zero order first class Bessel function which takes a maximum Doppler Shift corresponding to a signal in the orthogonal filtering space corresponding to the first order autoregressive channel model as a variable. In a case of using the maximum ratio combining algorithm, the coefficient of the equivalent first order autoregressive channel model is a mean value of squares of coefficients of the first order autoregressive channel models in the orthogonal filtering spaces.

As indicated by dashed line blocks in Figure 9, the above method may further include the steps: periodically measuring the root mean square wave number spread and the moving speed of the device performing the method (S15); and determining whether a change of an indication value based on the root mean square wave number spread and moving speed exceeds a predetermined range (S16), and transmitting the indication value to an apparatus communicating with the device in a case where it is determined that the change exceeds the predetermined range (S17), such that the apparatus determines a period of the device reporting the channel quality index and the number of channel quality indexes to be transmitted each time based on the indication value. Otherwise, the process returns to step S15.

In addition, although not shown in the figure, the above method may further include a step of transmitting the channel quality index to the apparatus. In another aspect, the above method may further include receiving information related to the period of transmitting the channel quality index and the number of the channel quality indexes to be transmitted each time from the apparatus to transmit the channel quality index based on the information. The above indication value is, for example, a product of the root mean square wave number spread and a square value of the moving speed.

In step S15, a root mean square wave number spread corresponding to a signal with a maximum power among the spatially orthogonal splitting filtered signals may be taken as the root mean square wave number spread. Alternatively, a weighted sum of root mean square wave number spreads may be taken as the root mean square wave number spread, where each of the root mean square wave number spreads is weighted using a power of a spatially orthogonal splitting filtered signal in an orthogonal filtering space corresponding to the root mean square wave number spread.

Figure 11 shows a method for optimizing a parameter in an effective signal-to-noise ratio mapping algorithm according to an embodiment of the present disclosure, which includes the following steps: calculating a coefficient of a first order autoregressive channel model of each of orthogonal filtering spaces using filtering coefficients of a filter corresponding to the orthogonal filtering space in a filter bank (S21), where the filter bank includes a plurality of filters with filtering spaces orthogonal to each other and is configured to perform spatially orthogonal splitting filtering on a signal received through multi-antenna, to obtain a plurality of spatially orthogonal splitting filtered signals; combining the first order autoregressive channel models to obtain an equivalent first order autoregressive channel model (S22); and generating a wireless channel implementation using the equivalent first order autoregressive channel model, and optimizing the parameter using the wireless channel implementation (S23).

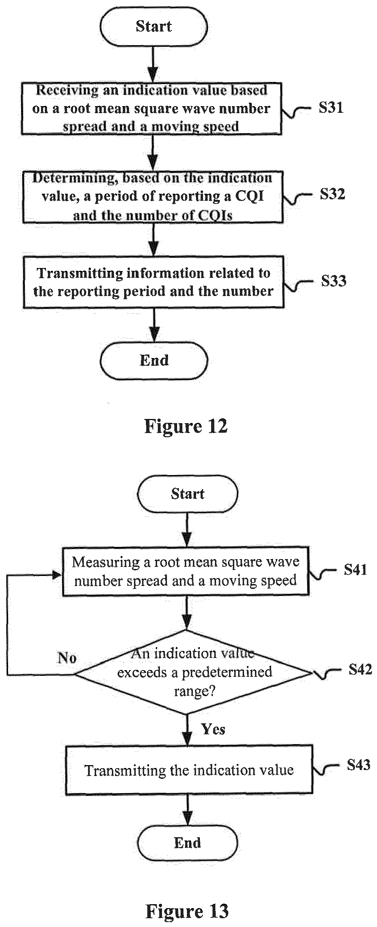

Figure 12 shows a method for a transmitting end of wireless communications according to an embodiment of the present disclosure, which includes the following steps: receiving, from a receiving end, an indication value based on a root mean square wave number spread and a moving speed (S31); determining, based on the indication value, a period of the receiving end reporting a channel quality index and the number of channel quality indexes to be transmitted each time (S32); and transmitting, to the receiving end, information related to the period of reporting the channel quality index and the number of channel quality indexes (S33).

For example, in step S32, a report period corresponding to a representing value closest to the indication value may be selected by comparing the indication value with multiple representing values. To be understood, in the case where it is agreed that the number of the reported CQIs is the same as the number of frames persistent in the reporting period, only the reporting period may be determined in step S32, and only information related to the reporting period may be transmitted in step S33.

Figure 13 shows a method for a receiving end of wireless communications according to an embodiment of the present disclosure, which includes the following steps: periodically measuring the root mean square wave number spread and the moving speed of the receiving end (S41); determining whether the change of the indication value based on the root mean square wave number spread and the moving speed exceeds the predetermined range (S42); and transmitting the indication value to the transmitting end in a case where it is determined that the change exceeds the predetermined range (S43), such that the transmitting end determines the period of the receiving end reporting the channel quality index and the number of channel quality indexes to be transmitted each time based on the indication value, otherwise the process returns to step S41. The above indication value is, for example, a product of the root mean square wave number spread and a square value of the moving speed.

Although not shown in Figure 13, before performing step S41, spatial orthogonal splitting filtering may be performed on a signal received through multi-antenna by a plurality of filters with filtering spaces orthogonal to each other, to obtain a plurality of spatially orthogonal splitting filtered signals respectively. In step S41, a root mean square wave number spread corresponding to a signal with a maximum power among the spatially orthogonal splitting filtered signals may be taken as the root mean square wave number spread. Alternatively, a weighted sum of root mean square wave number spreads may be taken as the root mean square wave number spread, where each of the root mean square wave number spreads is weighted using a power of a spatially orthogonal splitting filtered signal in an orthogonal filtering space corresponding to the root mean square wave number spread.

In addition, the above method may further include receiving, from the transmitting end, information related to the period of transmitting the channel quality index and the number of channel quality indexes to be transmitted each time. To be understood, in the case where it is agreed that the number of the reported CQIs is the same as the number of frames persistent in the reporting period, information related to the reporting period may also be received.

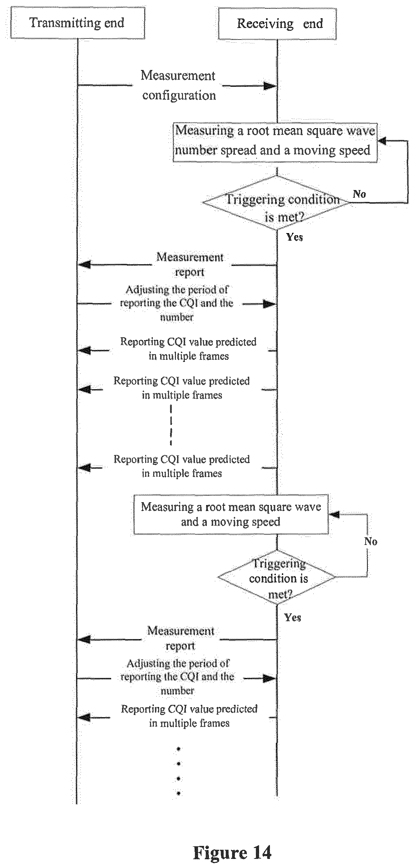

For ease of understanding, Figure 14 shows a related information procedure between the transmitting end and the receiving end. As shown in Figure 14, the transmitting end first transmits to the receiving end measurement configuration parameters of the root mean square wave number spread and the moving speed, such as a measurement period. The receiving end measures root mean square wave number spread and the moving speed based on the measurement configuration parameters, and transmits a measurement report to the transmitting end in a case where it is determined that the change of the indication value based on the root mean square wave number spread and the moving speed meets a triggering condition (such as exceeding a predetermined range). The measurement report includes, for example, the above indication value. The transmitting end determines an adjustment on the reporting period of the CQI and the number of reported CQIs based on the indication value, and transmits it to the receiving end. The receiving end reports the CQI based on the adjustment. In addition, the above process is periodically repeated. It should be understood that the information procedure shown in Figure 14 is merely exemplary and the present disclosure is not limited thereto.

It is to be noted that, the above methods can be used separately or in conjunction with each other. The details have been described in detail in the first to sixth embodiments, and are not repeatedly described here.

The basic principle of the present invention has been described above in conjunction with particular embodiments. However, as can be appreciated by those ordinarily skilled in the art, all or any of the steps or components of the method and device according to the invention can be implemented in hardware, firmware, software or a combination thereof in any computing device (including a processor, a storage medium, etc.) or a network of computing devices by those ordinarily skilled in the art in light of the disclosure of the invention and making use of their general circuit designing knowledge or general programming skills.

Those skilled in the art should understand that the units in the apparatus described above such as the filter bank, the channel predicting unit, the effective signal-to-noise ratio predicting unit, the channel quality index calculating unit, the measuring unit, the determining unit, the modeling unit and the optimizing unit may be implemented by one or more processors. The transceiving unit, the transmitting unit, the receiving unit and the like may be implemented by circuit components such as an antenna, a filter, a modem, a codec and the like.

Therefore, an electronic device (1) is further provided according to the present disclosure, which includes a circuit configured to: perform spatial splitting filtering on a signal received through multi-antenna to obtain a plurality of spatially split signals respectively; and perform, based on the plurality of spatially split signals, channel prediction in respective spaces respectively.

An electronic device (2) is further provided according to the present disclosure, which includes a circuit configured to: calculate a coefficient of a first order autoregressive channel model of each of the orthogonal filtering spaces using filtering coefficients of a filter corresponding to the orthogonal filtering space in a filter bank, and combine the first order autoregressive channel models to obtain an equivalent first order autoregressive channel model, where the filter bank includes a plurality of filters with filter spaces orthogonal to each other, and is configured to perform spatial orthogonal splitting filtering on a signal received through multi-antenna to obtain a plurality of spatially orthogonal splitting filtered signals respectively; and generating a wireless channel implementation using the equivalent first order auto-regressive channel model, and optimizing the parameter using the wireless channel implementation.

An electronic device (3) is further provided according to the present disclosure, which includes a circuit configured to: periodically measure the root mean square wave number spread and the moving speed of the receiving end where the electronic device is located; determining whether a change of the indication value based on the root mean square wave number spread and the moving speed exceeds a predetermined range; and transmitting the indication value to the transmitting end in a case where it is determined that the change exceeds the predetermined range, such that the transmitting end determines the period of the receiving end reporting the channel quality index and the number of the channel quality indexes to be transmitted each time based on the indication value.

An electronic device (4) is further provided according to the present disclosure, which includes a circuit configured to: receive information of the indication value based on the root mean square wave number spread and the moving speed from a receiving end with which the electronic device communicates; determining, based on the indication value, the period of the receiving end reporting the channel quality index and the number of the channel quality indexes to be transmitted each time; and transmitting information related to the period of reporting the channel quality index and the number of the channel quality indexes to be transmitted each time to the receiving end.

Moreover, the present invention further discloses a program product in which machine-readable instruction codes are stored. The aforementioned methods according to the embodiments can be implemented when the instruction codes are read and executed by a machine.

Accordingly, a memory medium for carrying the program product in which machine-readable instruction codes are stored is also covered in the present invention. The memory medium includes but is not limited to soft disc, optical disc, magnetic optical disc, memory card, memory stick and the like.

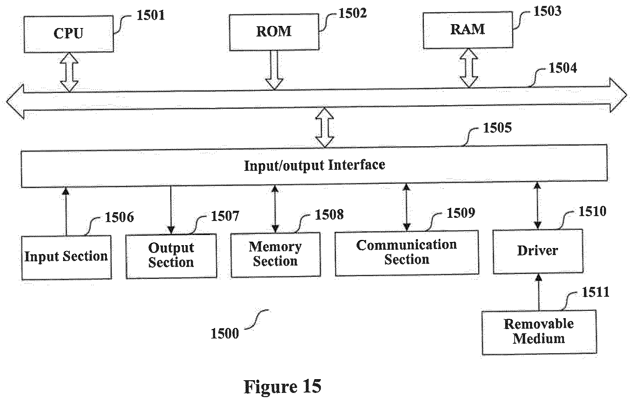

In the case where the present application is realized by software or firmware, a program constituting the software is installed in a computer with a dedicated hardware structure (e.g. the general computer 1500 shown in Figure 15) from a storage medium or network, wherein the computer is capable of implementing various functions when installed with various programs.

In Figure 15, a central processing unit (CPU) 1501 executes various processing according to a program stored in a read-only memory (ROM) 1502 or a program loaded to a random access memory (RAM) 1503 from a memory section 1508. The data needed for the various processing of the CPU 1501 may be stored in the RAM 1503 as needed. The CPU 1501, the ROM 1502 and the RAM 1503 are linked with each other via a bus 1504. An input/output interface 1505 is also linked to the bus 1504.

The following components are linked to the input/output interface 1505: an input section 1506 (including keyboard, mouse and the like), an output section 1507 (including displays such as a cathode ray tube (CRT), a liquid crystal display (LCD), a loudspeaker and the like), a memory section 1508 (including hard disc and the like), and a communication section 1509 (including a network interface card such as a LAN card, modem and the like). The communication section 1509 performs communication processing via a network such as the Internet. A driver 1510 may also be linked to the input/output interface 1505. If needed, a removable medium 1511, for example, a magnetic disc, an optical disc, a magnetic optical disc, a semiconductor memory and the like, may be installed in the driver 1510, so that the computer program read therefrom is installed in the memory section 1508 as appropriate.

In the case where the foregoing series of processing is achieved by software, programs forming the software are installed from a network such as the Internet or a memory medium such as the removable medium 1511.

It should be appreciated by those skilled in the art that the memory medium is not limited to the removable medium 1511 shown in Figure 15, which has program stored therein and is distributed separately from the apparatus so as to provide the programs to users. The removable medium 1511 may be, for example, a magnetic disc (including floppy disc (registered trademark)), a compact disc (including compact disc read-only memory (CD-ROM) and digital versatile disc (DVD), a magneto optical disc (including mini disc (MD)(registered trademark)), and a semiconductor memory. Alternatively, the memory medium may be the hard discs included in ROM 1502 and the memory section 1508 in which programs are stored, and can be distributed to users along with the device in which they are incorporated.

To be further noted, in the apparatus, method and system according to the invention, the respective components or steps can be decomposed and/or recombined. These decompositions and/or recombinations shall be regarded as equivalent schemes of the invention. Moreover, the above series of processing steps can naturally be performed temporally in the sequence as described above but will not be limited thereto, and some of the steps can be performed in parallel or independently from each other.

Finally, to be further noted, the term "include", "comprise" or any variant thereof is intended to encompass nonexclusive inclusion so that a process, method, article or device including a series of elements includes not only those elements but also other elements which have been not listed definitely or an element(s) inherent to the process, method, article or device. Moreover, the expression "comprising a(n) ...... " in which an element is defined will not preclude presence of an additional identical element(s) in a process, method, article or device comprising the defined element(s)" unless further defined.

Although the embodiments of the invention have been described above in detail in connection with the drawings, it shall be appreciated that the embodiments as described above are merely illustrative but not limitative of the invention. Those skilled in the art can make various modifications and variations to the above embodiments without departing from the spirit and scope of the invention. Therefore, the scope of the invention is defined merely by the appended claims and their equivalents.

**Claims**

1. An apparatus for wireless communications, comprising:

    a receiving signal splitting unit, configured to perform spatial splitting on a signal received through multi-antenna, to obtain a plurality of spatially split signals respectively; and
    a channel predicting unit, configured to perform, based on the plurality of spatially split signals, channel prediction in respective spaces, respectively.

2. The apparatus according to claim 1, wherein the receiving signal splitting unit comprises a filter bank, the filter bank comprises a plurality of filters with filtering spaces orthogonal to each other and is configured to perform spatially orthogonal splitting filtering on the received signal to obtain a plurality of spatially orthogonal splitting filtered signals respectively, and wherein the channel predicting unit is configured to perform, based on the plurality of spatially orthogonal splitting filtered signals, channel prediction in each orthogonal filtering space respectively.

3. The apparatus according to claim 2, further comprising:

    an effective signal-to-noise ratio predicting unit, configured to predict, based on a channel predicting result obtained by the channel predicting unit, an effective signal-to-noise ratio of the received signal; and
    a channel quality index calculating unit, configured to calculate a channel quality index based on the effective signal-to-noise ratio.

4. The apparatus according to claim 2, wherein the channel predicting unit comprises:

    an estimating module, configured to estimate, based on each of the spatially orthogonal splitting filtered signals, an equivalent channel parameter of each orthogonal filtering space; and
    a predicting module, configured to perform, based on the equivalent channel parameter estimated by the estimating module, channel prediction in each orthogonal filtering space respectively.

5. The apparatus according to claim 3, wherein the effective signal-to-noise ratio predicting unit comprises:

    a signal-to-noise ratio predicting module, configured to predict, based on the channel predicting result, a signal-to-noise ratio of each of the spatially orthogonal splitting filtered signals;
    a combining module, configured to combine the predicted signal-to-noise ratios of the spatially orthogonal splitting filtered signals to obtain an equivalent combining signal-to-noise ratio; and
    a calculating module, configured to calculate the effective signal-to-noise ratio based on the equivalent combining signal-to-noise ratio.

6. The apparatus according to claim 2, wherein filtering coefficients of each of the filters are set such that an arrival angle of each spatially orthogonal splitting filtered signal is limited within a different range corresponding to each of the filters.

7. The apparatus according to claim 2, wherein the channel predicting unit is configured to perform the prediction using a Linear extrapolation algorithm or a Cubic Spline Interpolation algorithm.

8. The apparatus according to claim 5, wherein the combining module is configured to perform the combination using one of the following combining manners: a maximum ratio combining, an equal gain combining and a selective combining.

9. The apparatus according to claim 5, wherein the calculating module is configured to calculate the effective signal-to-noise ratio using an effective signal-to-noise ratio mapping algorithm based on the equivalent combining signal-to-noise ratios in a frame.

10. The apparatus according to claim 9, wherein the calculating module is configured to perform the calculation using a mutual information effective signal-to-noise ratio mapping algorithm, wherein the calculating module is configured to optimize a parameter in the mutual information effective signal-to-noise ratio mapping algorithm using a first order autoregressive channel model.

11. The apparatus according to claim 10, wherein the calculating module is configured to create the first order autoregressive channel model for each of the orthogonal filtering spaces, combine the first order autoregressive channel models into an equivalent first order autoregressive channel model, and optimize the parameter using the equivalent first order autoregressive channel model, wherein a coefficient of the first order autoregressive channel model is based on filtering coefficients of a filter in an orthogonal filtering space corresponding to the first order autoregressive channel model.

12. The apparatus according to claim 11, wherein the coefficient of the first order autoregressive channel model is indicated by a zero order first class Bessel function which takes a maximum Doppler Shift corresponding to a signal in the orthogonal filtering space corresponding to the first order autoregressive channel model as a variable.

13. The apparatus according to claim 12, wherein, in a case where the maximum ratio combining algorithm is used, the coefficient of the equivalent first order autoregressive channel model is an average of squares of the coefficients of the first order autoregressive channel models for respective orthogonal filtering spaces.

14. The apparatus according to claim 3, wherein the channel quality index calculating unit is configured to obtain, based on the effective signal-to-noise ratio, the channel quality index by a table looking-up manner.

15. The apparatus according to claim 3, further comprising:

   a transceiving unit, configured to transmit the channel quality index to a device communicating with the apparatus.

16. The apparatus according to claim 15, wherein the transceiving unit is further configured to receive, from the device, information related to a period of transmitting the channel quality index and the number of channel quality indexes to be transmitted each time.

17. The apparatus according to claim 16, further comprising:

   a measuring unit, configured to periodically measure a root mean square wave number spread and a moving speed of the apparatus; and
   a determining unit, configured to determine whether a change of an indication value based on the root mean square wave number spread and the moving speed exceeds a predetermined range,
   wherein the transceiving unit is further configured to transmit the indication value to the device in a case where the determining unit determines that the change exceeds the predetermined range, so that the device determines, based on the indication value, the period of the apparatus reporting the channel quality index and the number of channel quality indexes to be transmitted each time.

18. The apparatus according to claim 17, wherein the measuring unit is configured to take a root mean square wave number spread corresponding to a signal with a maximum power among the spatially orthogonal splitting filtered signals as the root mean square wave number spread; or take a weighted sum of root mean square wave number spreads as the root mean square wave number spread, wherein each of the root mean square wave number spreads is weighted using a power of a spatially orthogonal splitting filtered signal in an orthogonal filtering space corresponding to the root mean square wave number spread.

19. The apparatus according to claim 17, wherein the indication value is a product of the root mean square wave number spread and a square value of the moving speed.

20. An apparatus for optimizing a parameter in an effective signal-to-noise ratio mapping algorithm, comprising:

a filter bank comprising a plurality of filters with filtering spaces orthogonal to each other and is configured to perform spatially orthogonal splitting filtering on a signal received through multi-antenna, to obtain a plurality of spatially orthogonal splitting filtered signals respectively;
a modeling unit, configured to calculate a coefficient of a first order autoregressive channel model of each of orthogonal filtering spaces using filtering coefficients of a filter corresponding to the orthogonal filtering space, and combine the first order autoregressive channel models to obtain an equivalent first order autoregressive channel model; and
generating a wireless channel implementation, optimizing and generating a wireless channel implementation using the wireless channel implementation, and optimizing the parameters using the wireless channel implementation.

21. An apparatus for a receiving end of wireless communications, comprising:

a measuring unit, configured to periodically measure a root mean square wave number spread and a moving speed of the apparatus;
a determining unit, configured to determine whether a change of an indication value based on the root mean square wave number spread and the moving speed exceeds a predetermined range; and
a transceiving unit, configured to transmit the indication value to a transmitting end in a case where the determining unit determines that the change exceeds the predetermined range, so that the transmitting end determines, based on the indication value, a period of the apparatus reporting a channel quality index and the number of channel quality indexes to be transmitted each time.

22. The apparatus according to claim 21, further comprising:

a filter bank comprising a plurality of filters with filtering spaces orthogonal to each other and is configured to perform spatially orthogonal splitting filtering on a signal received through multi-antenna, to obtain a plurality of spatially orthogonal splitting filtered signals;
wherein the measuring unit is configured to take a root mean square wave number spread corresponding to a signal with a maximum power among the spatially orthogonal splitting filtered signals as the root mean square wave number spread; or take a weighted sum of root mean square wave number spreads as the root mean square wave number spread, wherein each of the root mean square wave number spreads is weighted using a power of a spatially orthogonal splitting filtered signal in an orthogonal filtering space corresponding to the root mean square wave number spread.

23. The apparatus according to claim 21, wherein the transceiving unit is further configured to receive, from the transmitting end, information related to the period of transmitting the channel quality index and the number of channel quality indexes to be transmitted each time.

24. An apparatus for a transmitting end of wireless communications, comprising:

a receiving unit, configured to receive, from a receiving end, information of an indication value based on a root mean square wave number spread and a moving speed;
a determining unit, configured to determine, based on the indication value, a period of the receiving end reporting a channel quality index and the number of channel quality indexes to be transmitted each time; and
a transmitting unit, configured to transmit, to the receiving end, information related to the period of reporting the channel quality index and the number of channel quality indexes.

25. The apparatus according to claim 24, wherein the determining unit selects, by comparing the indication value with a plurality of representing values, a reporting period corresponding to a representing value which is the closest to the indication value.

26. A wireless communication system, comprising the apparatus according to any one of claims 21 to 23 and the apparatus according to claim 24 or 25.

27. A method for wireless communications, comprising:

    performing spatial splitting on a signal received through multi-antenna, to obtain a plurality of spatially split signals respectively; and
    performing, based on the plurality of spatially split signals, channel prediction in respective spaces, respectively.

28. A method for optimizing a parameter in an effective signal-to-noise ratio mapping algorithm, comprising:

    calculating a coefficient of a first order autoregressive channel model of each of orthogonal filtering spaces using filtering coefficients of a filter corresponding to the orthogonal filtering space in a filter bank, and combining the first order autoregressive channel models to obtain an equivalent first order autoregressive channel model, wherein the filter bank comprises a plurality of filters with filtering spaces orthogonal to each other and is configured to perform spatially orthogonal splitting filtering on a signal received through multi-antenna, to obtain a plurality of spatially orthogonal splitting filtered signals respectively; and
    generating a wireless channel implementation using the equivalent first order autoregressive channel model, and optimizing the parameter using the wireless channel implementation.

29. A method for a receiving end of wireless communications, comprising:

    periodically measuring a root mean square wave number spread and a moving speed of the receiving end;
    determining whether a change of an indication value based on the root mean square wave number spread and the moving speed exceeds a predetermined range; and
    transmitting the indication value to a transmitting end in a case where it is determined that the change exceeds the predetermined range, so that the transmitting end determines, based on the indication value, a period of the apparatus reporting a channel quality index and the number of channel quality indexes to be transmitted each time.

30. A method for a transmitting end of wireless communications, comprising:

    receiving, from a receiving end, information of an indication value based on a root mean square wave number spread and a moving speed;
    determining, based on the indication value, a period of the receiving end reporting a channel quality index and the number of channel quality indexes to be transmitted each time; and
    transmitting, to the receiving end, information related to the period of reporting the channel quality index and the number of channel quality indexes.

100

| Receiving signal splitting unit 101 | Channel predicting unit 102 |
| Effective signal-to-noise ratio predicting unit 103 | Channel quality index calculating unit 104 |

Figure 1

102

| Estimating module 1021 | Predicting module 1022 |

Figure 2

103

| Signal-to-noise ratio predicting module 1031 | Combining module 1032 | Calculating module 1033 |

Figure 3

200

| Receiving signal splitting unit 101 | Channel predicting unit 102 | Effective signal-to-noise ratio predicting unit 103 |

| Channel quality index calculating unit 104 | Transceiving unit 201 | Measuring unit 202 | Determining unit 203 |

Figure 4

Figure 5

| Representing value | Reporting period | Reporting number |
|---|---|---|
| T1 | A | N1 |
| T1 | B | N2 |
| T3 | C | N3 |
| T4 | D | N4 |
| T5 | E | N5 |
| T6 | F | N6 |
| ...... | ...... | ...... |

Figure 6

400

| Measuring unit 401 | Determining unit 402 | Transceiving unit 403 | Filter bank 404 |
|---|---|---|---|

Figure 7

500

| Filter bank 501 | Modeling unit 502 | Optimizing unit 503 |
|---|---|---|

Figure 8

Start

Performing spatial splitting on a received signal — S11

Performing channel prediction based on the spatially split signal — S12

Predicting an effective SNR of the received signal — S13

Calculating a channel quality index — S14

Measuring a root mean square wave number spread and a moving speed — S15

The indication value exceeds a predetermined range? — S16

No

Yes

Transmitting the indication value — S17

End

**Figure 9**

Predicting a SNR of each spatially
orthogonal splitting filtered signal — S131

Combining the predicted SNRs to
obtain an equivalent combining SNR — S132

Calculating an effective SNR — S133

Figure 10

Start

Calculating a coefficient of a first order
autoregressive channel model of each
orthogonal splitting filtering space — S21

Combining the first order autoregressive
channel models to obtain an equivalent
first order autoregressive channel model — S22

Generating a wireless channel
implementation to perform the
optimization — S23

End

Figure 11

Start

Receiving an indication value based on a root mean square wave number spread and a moving speed ⟩⌢ S31

Determining, based on the indication value, a period of reporting a CQI and the number of CQIs ⟩⌢ S32

Transmitting information related to the reporting period and the number ⟩⌢ S33

End

**Figure 12**

Start

Measuring a root mean square wave number spread and a moving speed ⌢ S41

An indication value exceeds a predetermined range? ⌢ S42

No

Yes

Transmitting the indication value ⌢ S43

End

**Figure 13**

Transmitting end        Receiving end

Measurement
configuration

Measuring a root mean square wave
number spread and a moving speed

Triggering condition
is met?    **No**

**Yes**

Measurement
report

Adjusting the period of
reporting the CQI and the
number

Reporting CQI value predicted
in multiple frames

Reporting CQI value predicted
in multiple frames

Reporting CQI value predicted
in multiple frames

Measuring a root mean square wave
and a moving speed

**No**

Triggering
condition is
met?

**Yes**

Measurement
report

Adjusting the period of
reporting the CQI and the
number

Reporting CQI value predicted
in multiple frames

**Figure 14**

**Figure 15**

<table>
<tr><td colspan="2"><b>INTERNATIONAL SEARCH REPORT</b></td><td>International application No.<br><b>PCT/CN2017/076303</b></td></tr>
</table>

**A. CLASSIFICATION OF SUBJECT MATTER**

H04W 24/02 (2009.01) i; H04B 17/309 (2015.01) i; H04B 17/391 (2015.01) i

According to International Patent Classification (IPC) or to both national classification and IPC

**B. FIELDS SEARCHED**

Minimum documentation searched (classification system followed by classification symbols)

H04W H04Q H04L H04B

Documentation searched other than minimum documentation to the extent that such documents are included in the fields searched

Electronic data base consulted during the international search (name of data base and, where practicable, search terms used)

CNPAT, CNKI, WPI, EPODOC, IEEE, 3GPP: multi-antenna, space domain, parameter, channel model, antenna?, orthogonal, divid+, partit+, segment+, space, spacial, dimensional, channel predict+, channel estimat+, model+, optimiz+, signal, filter+, model set, autoregressive

**C. DOCUMENTS CONSIDERED TO BE RELEVANT**

| Category* | Citation of document, with indication, where appropriate, of the relevant passages | Relevant to claim No. |
|---|---|---|
| X | CN 1767514 A (PLA UNIVERSITY OF SCIENCE AND TECHNOLOGY), 03 May 2006 (03.05.2006), description, page 2, line 1 to page 5, line 18 | 1-10, 14, 27 |
| Y | CN 1767514 A (PLA UNIVERSITY OF SCIENCE AND TECHNOLOGY), 03 May 2006 (03.05.2006), description, page 2, line 1 to page 5, line 18 | 15-19 |
| X | CN 105099532 A (POTEVIO INFORMATION TECHNOLOGY CO., LTD.), 25 November 2015 (25.11.2015), description, paragraphs [0006]-[0022] and [0051]-[0098] | 21-26, 29-30 |
| Y | CN 105099532 A (POTEVIO INFORMATION TECHNOLOGY CO., LTD.), 25 November 2015 (25.11.2015), description, paragraphs [0006]-[0022] and [0051]-[0098] | 15-19 |
| A | CN 103856298 A (UNIVERSITY OF SCIENCE AND TECHNOLOGY OF CHINA), 11 June 2014 (11.06.2014), the whole document | 1-30 |
| A | CN 101325438 A (SHANGHAI RESEARCH CENTER FOR WIRELESS COMMUNICATIONS (WICO)), 17 December 2008 (17.12.2008), the whole document | 1-30 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 10 June 2017 (10.06.2017) | **16 June 2017 (16.06.2017)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br><br>**FENG, Nan**<br><br>Telephone No.: (86-10) **61648273** |

Form PCT/ISA/210 (second sheet) (July 2009)

## INTERNATIONAL SEARCH REPORT

| International application No. |
| --- |
| PCT/CN2017/076303 |

**C (Continuation).      DOCUMENTS CONSIDERED TO BE RELEVANT**

| Category* | Citation of document, with indication, where appropriate, of the relevant passages | Relevant to claim No. |
| --- | --- | --- |
| A | US 2015139000 A1 (QUALCOMM INCORPORATED), 21 May 2015 (21.05.2015), the whole document | 1-30 |
| A | US 2014270020 A1 (BOGDAN, J.W.), 18 September 2014 (18.09.2014), the whole document | 1-30 |
| A | ZHOU, Shengli et al., "Semi-Blind Channel Estimation for Block Precoded Space-Time Ofdm Transmissions", IEEE, 31 December 2001 (31.12.2001), pages 381-384 | 1-30 |

Form PCT/ISA/210 (continuation of second sheet) (July 2009)

INTERNATIONAL SEARCH REPORT

International application No.

**PCT/CN2017/076303**

**Box No. III    Observations where unity of invention is lacking (Continuation of item 3 of first sheet)**

This International Searching Authority found multiple inventions in this international application, as follows:

[1]    invention: claims 1-20, 27 and 28, which relate to a method and a device for performing space division to received signals, and performing channel prediction and channel optimization according to the segmentation results;

[2]

[3]    invention: claims 21-26, 29 and 30, which relate to a method and a device for judging and sending the reporting cycles for indicating the channel quality indication of a receiving end and the number thereof according to the periodically measured mean square root beam expansion and the movement speed of the receiving end; and

[4]    the above-mentioned two groups of inventions relate to performing the channel prediction and optimization through spatially dividing the receiving signals and controlling a channel quality indication report according to the specified parameters respectively; the two groups of inventions do not share the same or the corresponding special technical feature, are linked to each other, and accordingly do not fall within a single general inventive concept, and thus lack unity.

1. ☒    As all required additional search fees were timely paid by the applicant, this international search report covers all searchable claims.

2. ☐    As all searchable claims could be searched without effort justifying additional fees, this Authority did not invite payment of additional fees.

3. ☐    As only some of the required additional search fees were timely paid by the applicant, this international search report covers only those claims for which fees were paid, specifically claims Nos.:

4. ☐    No required additional search fees were timely paid by the applicant. Consequently, this international search report is restricted to the invention first mentioned in the claims; it is covered by claims Nos.:

**Remark on protest**        ☒    The additional search fees were accompanied by the applicant's protest and, where applicable, the payment of a protest fee.

☐    The additional search fees were accompanied by the applicant's protest but the applicable protest fee was not paid within the time limit specified in the invitation.

☐    No protest accompanied the payment of additional search fees.

Form PCT/ISA/210 (continuation of first sheet (2)) (July 2009)

## INTERNATIONAL SEARCH REPORT
### Information on patent family members

International application No.

**PCT/CN2017/076303**

| Patent Documents referred in the Report | Publication Date | Patent Family | Publication Date |
|---|---|---|---|
| CN 1767514 A | 03 May 2006 | None | |
| CN 105099532 A | 25 November 2015 | None | |
| CN 103856298 A | 11 June 2014 | None | |
| CN 101325438 A | 17 December 2008 | None | |
| US 2015139000 A1 | 21 May 2015 | None | |
| US 2014270020 A1 | 18 September 2014 | US 2016006467 A1 | 07 January 2016 |
| | | US 2012307923 A1 | 06 December 2012 |
| | | US 2014192913 A1 | 10 July 2014 |
| | | US 2015312078 A1 | 29 October 2015 |
| | | US 2015319024 A1 | 05 November 2015 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201610141563